# EUROPÄISCHE PATENTANMELDUNG

(11) **EP 0 786 422 A2**
(43) Veröffentlichungstag der Anmeldung: **30.07.1997**
(21) Anmeldenummer: 97100411.4
(22) Anmeldetag: 13.01.1997
(51) Int. Cl.: B65D 90/46

(54) **Verwendung einer einseitig elektrisch leitfähigen Polyurethanfolie zur Herstellung von flexiblen Einlagen für Behälter zur Lagerung brennbarer Flüssigkeiten**

(30) Priorität: 26.01.1996 DE 19602748
(71) Anmelder: WOLFF WALSRODE AG, D-29655 Walsrode (DE)
(72) Erfinder: Stenbeck, Wolfgang, 29699 Bomlitz (DE); Büschel, Gerd, 29664 Walsrode (DE); Hargarter, Nicole, Charlottesville, Virginia 22903 (US); Schultze, Dirk, 29683 Fallingbostel (DE)
(74) Vertreter: Braun, Rolf, Dr.

(57) **Zusammenfassung**

Die Erfindung betrifft die Verwendung einer mindestens zweischichtigen, einseitig elektrisch leitfähigen Folie aus thermoplastischem Polyurethan (TPU) als flexible Einlage für Behälter zur Lagerung brennbarer Flüssigkeiten, die dadurch gekennzeichnet ist, daß sie aus mindestens
A) Einer Schicht (1) aus leitfähig modifiziertem TPU, enthaltend
   I. TPU als Basisrohstoff
   II. Ruß mit einer Oberfläche nach der BET-Methode von größer oder gleich 600 m²/g und
   III. gegebenenfalls die für die TPU- und Folienherstellung bekannten Zusatzstoffe
B) einer Schicht (2) aus nicht leitfähig modifizierten TPU, enthaltend
   IV. TPU als Basisrohstoff und
   V. gegebenenfalls die für die TPU-Folienherstellung bekannten Zusatzstoffe
gebildet wird.

## Beschreibung

Lagerbehälter mit Innenbeschichtung, zweiter Wand oder Leckschutzauskleidung werden in großem Umfang zum Schutz von Wasser und Erdreich gegen die Verschmutzung durch Mineralöl oder Mineralölprodukte eingesetzt.

So gibt die DE-GM 9 109 544 eine umfassende Übersicht über die in der Patentliteratur genannten Ausführungen von Tanksystemen.

Anforderungen an eine Innenbeschichtung werden in der TRbF 401 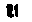 Richtlinie für Innenbeschichtungen von Behältern zur Lagerung brennbarer Flüssigkeiten der Gruppe A Gefahrklasse I, II und der Gruppe B 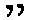 beschrieben (Carl Heymanns Verlag KG, Luxemburger Str. 449, 5000 Köln 41). Dort wird auch erwähnt, daß die Beschichtung nicht zu Zündgefahren durch elektrostatische Aufladung führen und daher der Durchgangs- bzw. Erdableitwiderstand 10⁸ Ohm nicht überschreiten darf.

Die Gefahren durch Entladung statischer Elektrizität und Schutzmaßnahmen dagegen werden in der Richtlinie Nr. 4 der Chemischen Industrie (ZH 1/200) erläutert. Demnach sind bei festen Stoffen, deren Oberflächenwiderstand - gemessen im Normalklima 23/50 - kleiner oder gleich 10⁹ Ohm ist, gefährliche Aufladungen nicht zu erwarten.

Zur Soforterkennung von Undichtigkeiten der Wandungen von Behältern, in denen wassergefährdene Flüssigkeiten gelagert werden, hat sich das Vorsehen eines Leckanzeigegerätes bewährt, das sowohl unterhalb als auch oberhalb des Flüssigkeitsspiegels des Lagergutes ein Leck selbststätig anzeigt (TrbF 501 "Richtlinie/Bau- und Prüfgrundsätze für Leckanzeigegeräte für Behälter", Carl Heymanns Verlag KG, Luxemburger Str. 449, 5000 Köln 41).

Unter dem Begriff Leckanzeigegerät sind alle für die Leckerkennung an Behältern erforderlichen Anlagenteile zusammengefaßt, wie Überwachungsräume von Doppelwandsystemen, Leckschutzauskleidungen, Leckanzeiger und Leckanzeigemedien.

Lecks werden prinzipiell auf die folgende Weise festgestellt:
Zwischen den Wänden eines doppelwandigen Behälters oder der Wand eines einwandigen Behälters und einer Einlage (Teil einer Leckschutzauskleidung) wird ein Zwischenraum erzeugt, der sogenannte Überwachungsraum, welcher der Aufnahme des Leckanzeigemediums - Flüssigkeit, Luftüber- oder -unterdruck - dient.

Bei Undichtigkeit des Behälters läuft die Leckanzeigeflüssigkeit aus bzw. der Druck im Überwachungsraum ändert sich und es wird ein Alarmsignal ausgelöst.

Nachteile eines Lagerbehälters mit einer Hauptwandung zur Aufnahme mechanischer Kräfte, auf die direkt festhaftend eine Beschichtung aufgebracht wird, sind:
1. Eine kontinuierliche Dichtheitskontrolle unter Verwendung eines Leckanzeigegerätes ist nicht durchführbar.
2. Die Beschichtungmasse, in der Regel ein aushärtender Kunststoff, vorzugsweise ungesättigtes Polyesterharz, muß nachträglich appliziert werden, wobei sich eine einheitliche Auftragsschichtdicke nur sehr schwer erreichen läßt. Variable Auftragsdicken verursachen jedoch eine ungleichmäßig Ableitung der elektrostatischen Aufladung von der inneren Oberfläche der Beschichtung, da die unter der Deckschicht angebrachten Ableitungswege (Pulver oder Netz aus elektrisch leitfähigem Material) unterschiedliche Abstände zur inneren Oberfläche aufweisen.

Das DE-GM 1 822 483 und DE-GM 9 109 544 betreffen einwandige Behälter mit Leckschutzauskleidung, wobei jeweils Teil dieser Auskleidung eine flexible Einlage ist. Bei Lagerbehältern diesen Typs kann eine ständige Dichtheitskontrolle prinzipiell gewährleistet werden.

DE-GM 1 822 483 beschreibt eine flexible Einlage aus vollsynthetischem Gewebe, das zum Tankinneren hin mit Polyesterurethan beschichtet ist, wobei die Beschichtungsmasse vorzugsweise leitfähige Stoffe, z.B. Ruß, enthält. Elektrostatische Aufladungen können also sicher nur auf der Innenseite der flexiblen Einlage abgeleitet werden.

Nach DE-GM 9 109 544 wird zwischen einer flexiblen Einlage aus elektrisch nicht leitfähigem Material und der Außenwandung eine in einzelne Sektionen unterteilte Schicht aus elektrisch leitendem Material angebracht. Dadurch kann die Ableitung einer elektrostatischen Aufladung von der zur Tankaußenseite liegenden Einlagenoberfläche sektionsweise überprüft werden. Eine Ableitung der elektrostatischen Aufladung auf der Einlageninnenseite ist jedoch nicht vorgesehen.

Sollen Treibstoffe gelagert werden, so muß u. a. die Verhinderung von Zündfunken sicher gewährleistet sein. Hierzu ist mindestens die leitfähige Ausbildung einer Außenschicht der verwendeten Folie bzw. der Innenseite der blasenförmigen Einlage vonnöten. Es ist bereits von Eymer in Kautschuk+Gummi, Kunststoffe 46 (1993) S.57-62 ausgeführt worden, daß für Faltbehäter die Leitfähigkeit der Außenschicht der Folie genügt und ein geringer Durchgangswiderstand nicht erforderlich ist.

Materialien mit Oberflächenwiderständen >10¹³ Ohm, gemessen nach DIN 53 482, werden allgemein als isolierend, mit Widerständen <10⁵ Ohm als leitfähig bezeichnet. Materialien, deren elektrische Widerstände zwischen diesen beiden Grenzwerten liegen, werden als statische Elektrizität dissipierende oder oft auch einfach als antistatische Materialien eingeordnet.

Als Rohstoffbasis für flexible Einlagen werden insbesondere Kunststoffe eingesetzt. So legt die TRbF 501 (Bezugsquelle s.o.) explizit die Baugrundsätze für Einlagen aus unverstärkten PVC-Weich-Bahnen fest. Die Beständigkeit von Weich-PVC gegen organische Lösungsmittel und Mineralölprodukte ist allerdings unbefriedigend.

Thermoplastische Polyurethane (TPU) zeichnen sich dagegen durch die Kombination von guter Zug- und Weiterreißfestigkeit, hoher Dehnfähigkeit und guter Kälteflexibilität mit chemischer Beständigkeit aus. TPU sind seit langem bekannt und enthalten im wesentlichen drei Basiskomponenten: Diisocyanat, kurzkettiges Polyol - auch Kettenverlängerer genannt - und langkettiges Polyol. Die breite Palette an Rohstoffen für jede dieser Komponenten begründet die große Variationsbreite der TPU-Chemie und damit auch der Polyurethaneigenschaften.

Eine Übersicht über chemischen Aufbau, Herstellung, Eigenschaften und Anwendungen von TPU liefert z.B. Kunststoffe 68 (1978) 12, S. 819 bis 825 und Polyurethane Elastomers von C. Hepburn, Applied Science Publisher Ltd., Barking Essex, England, 1982.

Die bekanntesten Herstellungsverfahren für TPU, das sogenannte Bandverfahren und das Extruderverfahren, werden in EP-B 0 129 193 erläutert.

TPU gleicher Zusammensetzung sind nach dem Extruderverfahren transparent, während sie nach dem Bandverfahren ein opakes Aussehen und eine höhere Schmelzeviskosität aufweisen.

TPU können weiterhin - wie auf dem Kunststoffsektor allgemein üblich - durch Zusatzstoffe modifiziert werden. Zum Einsatz kommen u.a. Hydrolyse-, Hitze- und UV-Stabilisatoren, Gleit- und Schmierstoffe, Farbpigmente, Biozide und anorganische Füllstoffe, wie z.B. Kieselsäure, wobei letztere in Folien auch als Abstandshalter wirken.

Ein verbessertes antistatisches Verhalten kann durch den Zusatz von antistatischen Weichmachern oder von speziellen Rußen erreicht werden. Die Verwendung von Leitfähigkeitsrußen in Kunststoffmassen wird allgemein in "Use of the electroconductive carbon Ketjenblack" Research Disclosure Nr. 136, Aug. 1975, S. 26, Akzo Chemie und in Papier + Technik-Verarbeiter 2 (1991), S. 18 beschrieben.

EP-B 0 129 193 betrifft insbesondere ein Verfahren zur Herstellung von antistatischen und/oder leitfähigen TPU, die nach dem Bandverfahren hergestellt werden sowie deren Verwendung.

Nachteilig für die Folienextrusion wirkt sich das besondere Aufschmelzverhalten der nach dem Bandverfahren hergestellten TPU aus, welches für die Produktion von opaken Folien bei wirtschaftlicher Fahrweise, d.h. hohem Materialdurchsatz, speziell gestaltete Düsen und Schnecken mit einer Dekompressionszone erfordert.

Vorzuziehen wäre ein elektrisch leitfähig ausgerüstetes TPU, welches sich auf einer der üblicherweise für die Extrusion von TPU empfohlenen Dreizonenschnecken verarbeiten läßt.

Die leitfähige Austattung von Kunststoffen durch Einarbeiten von leitfähigen Rußen, wie in der DE 4217717 beschrieben, gehört zum Stand der Technik.

Jedoch bewirkt der eingearbeitete leitfähige Ruß, der sich durch hohe spezifische Oberflächen auszeichnet, mit seiner porösen Struktur eine Verringerung der Sperreigenschaften.

Ein zu hoher Stoffstrom durch die Einlage kann Leckagen vortäuschen und ist deshalb für eine hohe Betriebssicherheit nicht akzeptabel. Durchlässigkeiten unter 50 g/(m² d) werden allgemein als akzeptabel angesehen.

Die Aufgabe der vorliegenden Erfindung bestand darin, eine flexible Einlage für einen Behälter für brennbare Flüssigkeiten zur Verfügung zu stellen, die neben der Möglichkeit zur kontinuierlichen Dichtheitskontrolle des Behälters auch die größtmögliche Sicherheit gegen Gefahren durch elektrostatische Aufladung und ausreichende Sperrschichteigenschaften gegenüber Treibstoffkomponenten bietet.

Diese Aufgabe konnte überraschenderweise durch Bereitstellung einer einseitig mit einem speziellen Leitfähigkeitsruß ausgerüsteten Folie aus thermoplastischem Polyurethan gelöst werden.

Gegenstand der Erfindung ist somit die Verwendung einer mindestens zweischichtigen, elektrisch leitfähig ausgerüsteten TPU-Folie als flexible Einlage für Behälter zur Lagerung brennbarer Flüssigkeiten, die dadurch gekennzeichnet ist, daß sie mindestens enthält:
A) eine Schicht aus leitfähig modifiziertem TPU (1), mindestens gebildet aus:
   I. TPU, auch Blends aus verschiedenen TPU-Typen,
   II. Ruß, der
      a) eine Oberfläche nach der BET-Methode von größer oder gleich 600 m²/g, vorzugsweise von 800 bis 1200 m²/g (ASTM D-3037),
      b) eine durchschnittliche Teilchengröße von weniger als 500 nm, vorzugsweise von 20 bis 50 nm, besitzt,
   III. die für dieTPU- und Folienherstellung bekannten Zusatzstoffe,
B) eine Schicht aus TPU (2), die frei von den bekannten, die Leitfähigkeit erhöhenden Rußen ist, mindestens aber gebildet aus:
   IV. TPU, oder Blends aus verschiedenen TPU-Typen,
   V. die für die TPU- und Folienproduktion bekannten Zusatzstoffe.

Geeignete Aufbaukomponenten für den Basisrohstoff der Folie - TPU - werden in EP-B 0 129 193 detailliert beschrieben, sind aber auch der einschlägigen Polyurethan-Literatur zu entnehmen (z.B. Polyurethane Elastomers von C. Hepburn, Verlag s.o.). Vorzugsweise werden PU-Ester eingesetzt. Insbesondere ist aber auch die Herstellung eines Blends aus TPU-Typen unterschiedlicher Härte oder Polyol-Komponente, z.B. PU-Ester /PU-Ether denkbar.

Bevorzugt finden TPU, die nach dem Extruderverfahren hergestellt wurden, Verwendung. Es eignen sich grundsätzlich aber auch TPU nach dem Bandverfahren als Basisrohstoff für die Fertigung einer Folie, die der erfindungsgemäßen Verwendung dient.

TPU, die nach dem Extruderverfahren hergestellt sind, sind leichtfließender, erleichtern somit die Einarbeitung von hohen Rußkonzentrationen und erfordern keine spezielle Gestaltung von Düse oder Schnecke.

Ruße, die die erfindungsgemäß erforderlichen Merkmale erfüllen, werden beispielsweise unter dem Warenzeichen Printex® XE2 der Degussa und Ketjenblack® EC der Akzo Chemie vermarktet.

Die elektrische Leitfähigkeit des TPU erhöht sich mit zunehmender Rußkonzentration, während der elektrische Widerstand entsprechend abfällt. Der erfindungsgemäß geeignete Ruß wird in solchen Mengen eingesetzt, daß die elektrisch leitfähigen TPU 5 bis 20 Gew.-%, vorzugsweise 7 bis 15 Gew.-% Ruß, bezogen auf das Gesamtgewicht, enthalten.

Die Einarbeitung des Rußes in das zuvor in den plastischen Zustand überführte TPU erfolgt mit Hilfe von üblichen aus der Kautschuk- und Kunststoffindustrie bekannten Vorrichtungen, beispielsweise Knetern oder Extrudern, wobei Doppelwellenextruder vorzugsweise Anwendung finden.

Neben dem Ruß können in das TPU während desselben Verfährensschrittes auch Zusatzstoffe in üblichen Mengen eingearbeitet werden. Die Zugabe kann allerdings auch in Form von Additivbatchen bei der Folienextrusion erfolgen. Als übliche Zusatzstoffe seien beispielsweise Gleitmttel, Antiblockmittel, Inhibitoren, Stabilisatoren gegen Hydrolyse, Licht oder Hitze, Flammschutzmittel, Farbstoffe, Pigmente und anorganische und/oder organische Füllstoffe genannt.

Nähere Angaben über die obengenannten Zusatzstoffe sind der Fachliteratur, beispielsweise "High Polymers", Band XVI, Polyurethane, Teil1 und 2 , von J.H. Saunders und K.C. Frisch, Interscience Publishers, New York, 1962 bzw. 1964 oder dem "Kunststoff-Taschenbuch" von Hansjürgen Saechtling, Hanser, München, Wien, 1989, S. 53 bis 61, zu entnehmen.

Das leitfähige TPU kann ebenso wie das nicht leitfähig modifizierte TPU gegebenenfalls unter Zusatz von Additivbatchen, durch Schmelz(co)extrusion zu Folie verarbeitet werden. Geeignete Verfahren sind die Flachfilm-, vorzugsweise aber auch die Blasfilm(co)extrusion.

Die Mehrschichtenfolie, die Gegenstand der Erfindung ist, und je eine leitfähig modifizierte (1) sowie eine nicht leitfähig modifizierte Außenschicht (2) besitzt, kann durch Coextrusion hergestellt werden.

Ebenso geeignet ist die Herstellung des Mehrschichten-Aufbaues unter Verwendung von Einzelfolien (1) und (2), die unter Einwirkung von Wärme und Druck miteinander verbunden werden. Hierzu eignen sich z.B. die bekannten Heißkalander oder die bekannten Flachbettlaminiereinrichtungen. Erfindungsgemäß bevorzugt ist der Eintrag der Wärme direkt in die zu verbindenden jeweiligen Seiten der zu verbindenden Folien.

Die Verarbeitung von TPU durch Extrusion wird in der Fachliteratur, beispielsweise "Kunststoff-Handbuch", Band VII, Polyurethane von Becker und Braun, Hanser, München, Wien, 1983, S. 433 und 434, erläutert.

Die erfindungsgemäße Folie kann ein- oder beidseitig in üblicher Weise vorbehandelt werden, insbesondere mit einer Corona-, Fluor- oder Plasmavorbehandlung.

Die Dicke der einseitig leitfähigen Folie liegt zwischen 25 µm und 2 mm, wobei Blasfolien bevorzugt das untere und Flachfilme das obere Ende des obengenannten Dickenspektrums abdecken. So beträgt die Dicke einer Blasfolie aus dem leitfähig ausgerüstetem TPU vorzugsweise 25 bis 800 µm und die eines Flachfilms vorzugsweise 0,5 bis 2 mm.

Die Herstellung einer Mehrschichtfolie für die erfindungsgemäße Verwendung, die mindestens eine Schicht (1) aus leitfähigen TPU aufweist, ist ebenfalls Gegenstand dieser Anmeldung. Dies kann nach üblichen Verfahren wie Laminierung, Beschichtung oder Coextrusion erfolgen.

Innerhalb des erfindungsgemäßen mehrschichtigen Folienaufbaus beträgt die Dicke einer einzelnen leitfähig ausgerüsteten TPU-Schicht (1) 10 µm bis 500 µm vorzugsweise 100 µm bis 250 µm.

### Beispiele 1 und 2, Vergleichsbeispiele A und B

### Beispiel 1

Ein leitfähig ausgerüstetes TPU-Compound auf Basis eines PU-Esters, der nach dem Extruderverfähren hergestellt wurde, eine Härte von Shore A 88 und einen MFI (melt flow index) von 20 g/10 min, gemessen bei 190°C und einem Auflagegewicht von 8,7 kg besaß und in das 9 Gew.-%, bezogen auf das Gesamtgewicht, eines Leitfähigkeitsrußes vom Typ Printex® XE2 der Fa. Degussa mit einer Oberfläche nach der BET-Methode von 900 m²/g und einer mittleren Teilchengröße von 30 nm sowie ein Wachs in üblicher Menge zur Unterstützung der Trennbarkeit der Folie eingearbeitet worden waren, wurde zu einer einschichtigen Blasfolie A extrudiert.

Dafür wurde ein Einschneckenextruder mit einem Durchmesser von 45 mm und einer Länge von 25 D unter Verwendung einer üblichen Dreizonenschnecke mit einer Kompression von 1 : 2,57 und ein Einschicht-Schlauchfolienwerkzeug eingesetzt. Das Temperaturprogramm lag zwischen 165 und 185°C. Das leitfähige TPU-Compound der oben beschriebenen Zusammensetzung wurde unter diesen Bedingungen problemlos zu Folie geblasen, deren Dicke 150 µm bei den in der Folienindustrie üblichen Dickentoleranzen von ± 10% betrug.

Nach DIN 53 482 wurde der Oberflächenwiderstand R_{OA} zu 2,1·10³ Ohm bzw. 3,7·10³ Ohm (Schlauchinnen- bzw. -außenseite), der Durchgangswiderstand R_{D} zu 3,2·10³ Ohm ermittelt. Die Reißfestigkeit nach DIN 53 53 455 betrug in Längsrichtung 46 MPa, in Querrichtung 4 MPa.

Ein TPU auf Basis eines polymeren Ester-Diols, welches nach dem Extruderverfahren hergestellt wurde, eine Härte von Shore A 93 und einen MFI (melt flow index) von 20 g/10 min, gemessen bei 190°C und einem Auflagegewicht von 8,7 kg besaß und in welches ein Wachs in üblicher Menge zur Unterstützung der Trennbarkeit der Folie eingearbeitet worden war, wurde zu einer einschichtigen Blasfolie B extrudiert. Hierzu wurden dem TPU 2 Gew.-% bezogen auf das Gesamtgewicht, eines Antiblockbatches auf Basis TPU mit Kieselsäure als Abstandshalter und Amidwachs als Trennmittel zugesetzt, wobei die mechanischen und Sperrschicht-Eigenschaften der derartig zusammengesetzten Folie nicht beeinflußt, aber ihre Trennbarkeit verbessert wurde.

Dafür wurde ein Einschneckenextruder mit einem Durchmesser von 60 mm und einer Länge von 25 D unter Verwendung einer üblichen Dreizonenschnecke mit einer Kompression von 1 : 3,14 und ein Einschicht-Schlauchfolienwerkzeug eingesetzt. Das Temperaturprogramm lag zwischen 165 und 185°C. Das nicht leitfähige TPU der oben beschriebenen Zusammensetzung wurde unter diesen Bedingungen zu Folie geblasen, deren Dicke 500 µm bei den in der Folienindustrie üblichen Dickentoleranzen von ± 10% betrug.

Nach DIN 53 482 betrug der Oberflächenwiderstand R_{OA} 1,5·10¹¹ Ohm und der Durchgangswiderstand R_{D} 1,2·10¹¹ Ohm. Die Reißfestigkeit nach DIN 53 455 betrug in Längsrichtung 68 MPa, in Querrichtung 71 MPa.

Die beiden Folien A und B wurden in einem Heißkalander miteinander verbunden, wobei die für die Verbindung notwendige Wärme durch ein IR-Strahlerfeld eingebracht wurde. Die vormalige Folie A bildete die Schicht (1), die vormalige Folie B die Schicht (2). Nach DIN 53 532 betrug die Benzindurchlässigkeit, gemessen mit handelsüblichem Super-bleifrei-Kraftstoff, der Mehrschicht-Folie 20 g/(m²d).

### Beispiel 2

Ein leitfähig ausgerüstetes TPU-Compound auf Basis eines PU-Ethers, der nach dem Extruderverfahren hergestellt wurde, eine Härte von Shore A 90 und einem MFI (melt flow index) von 8 g/10 min, gemessen bei 200°C und einem Auflagegewicht von 10 kg, besaß und in das 8 Gew.-%, bezogen auf das Gesamtgewicht eines Leitfähigkeitsrußes vom Typ Ketjenblack EC 600® der Fa. Akzo sowie ein Wachs in üblicher Menge, eingearbeitet worden waren, wurde gemeinsam mit einem TPU-Ester der Shore-A-Härte 93 (vergleiche Beispiel 1), dem 2 Gew.-% Antiblockbatch zugesetzt wurden, zu einer zweischichtigen Folie coextrudiert.

Hierzu wurde eine Zweischicht-Coextrusions-Blasfolienanlage verwendet, die von einem Extruder mit 60 mm Durchmesser und einem Extruder mit 45 mm Durchmesser gespeist wurde.

Die leitfähige modifizierte Schicht (1) besaß eine Dicke von 200 µm, die nicht leitfähige Schicht (2) eine Dicke von 450 µm.

Nach DIN 53 482 wurde der Oberflächenwiderstand R_{OA} zu 4,5·10⁴ Ohm bzw. 1,5·10¹¹ Ohm (Schlauchinnen- bzw. -außenseite), der Durchgangswiderstand R_{D} zu 1,1·10¹¹ Ohm ermittelt. Die Reißfestigkeit nach DIN 53 455 betrug in Längsrichtung 54 MPa, in Querrichtung 51 MPa.

Die Benzindurchlässigkeit, gemessen nach DIN 53 532 mit handelsüblichem Super-bleifrei-Kräftstoff, lag bei 25 g/(m² d).

### Vergleichsbeispiel A

Die in Beispiel 1 beschriebene nicht leitfähig modifizierte PU-Ester-Type wurde unter Zugabe von 2 Gew.-%, bezogen auf das Gesamtgewicht, des auch in Beispiel 1 verwendeten Antiblockbatches analog den Angaben zu Beispiel 1 zu 650 µm starker einschichtiger Folie mit Dickentoleranzen innerhalb der ±10 % Grenzen extrudiert.

Dafür wurde der in Beispiel 1 angeführte Extrusionsanlagenaufbau und das dort erwähnte Temperaturprogramm gewählt.

Nach DIN 53 482 betrug der Oberflächenwiderstand R_{OA} 1,5·10¹¹ Ohm und der Durchgangswiderstand R_{D} 1,3 · 10¹¹ Ohm. Die Reißfestigkeit nach DIN 53 455 betrug in Längsrichtung 67 MPa, in Querrichtung 69 MPa.

Nach DIN 53 532 betrug die Benzindurchlässigkeit, gemessen mit handelsüblichem Super-bleifrei-Kraftstoff, 15 g/(m² d).

### Vergleichsbeispiel B

Die in Beispiel 2 beschriebene leitfähige PU-Ether-Type wurde analog den Angaben zu Beispiel 1 zu 650 µm starker Folie mit Dickentoleranzen innerhalb der ± 10 %-Grenzen extrudiert.

Nach DIN 53 482 wurde der Oberflächenwiderstand R_{OA} zu 2,3 · 10⁴ Ohm bzw. 8 · 10³ Ohm (Schlauchinnen- bzw. -außenseite), der Durchgangswiderstand zu 3,1 · 10³ Ohm ermittelt. Die Reißfestigkeit nach DIN 53 455 betrug in Längsrichtung 30 MPa, in Querrichtung 32 MPa. Die Benzindurchlässigkeit, gemessen nach DIN 53 532 mit handelsüblichem Super-bleifrei-Kraftstoff, lag bei 470 g/(m² d).

### Bewertung der Ergebnisse

Die nach den Beispielen 1 und 2 hergestellten erfindungsgemäßen Folien weisen einseitig Oberflächenwiderstände von deutlich unter 10⁸ Ohm bzw. 10⁹ Ohm auf und bieten damit bei der erfindungsgemäßen Verwendung als flexible Einlage für Behälter zur Lagerung brennbarer Flüssigkeiten hohe Sicherheit gegen Zündgefahren durch elektrostatische Aufladung. Hierzu muß die nicht leitfähig modifizierte TPU-Schicht der metallischen Wandung des auszukleidenden Behältnisses zugewandt sein. Die leitfähig modifizierte Schicht befindet sich in Kontakt mit dem zu lagernden Medium.

Durch die leitfähige Ausrüstung mit Ruß wird die Reißfestigkeit der modifizierten TPU-Schicht gegenüber der Standard-TPU-Folie (keine leitfähige Ausrüstung) von ungefähr 70 MPa auf 40 MPa reduziert. Sie liegt damit aber immer noch beachtlich über der Anforderung von ≥ 15 MPa gemäß TrbF 501, die für die Reißfestigkeit von unverstärkten PVC-Weich-Bahnen festgelegt wurde. Durch den Verbund mit nicht modifizierten Schichten aus TPU wird die mechanische Belastbarkeit noch weiter erhöht.

Auch von ihren mechanischen Eigenschaften her ist die erfindungsgemäße Folie daher gut als flexible Einlage geeignet.

Durch den mindestens zweischichtigen Verbund mit einer TPU-Ester-Sperrschicht gelingt es zudem, die Durchlässigkeit der erfindungsgemäßen Folien unter den Grenzwert von 50 g/(m² d) zu senken.

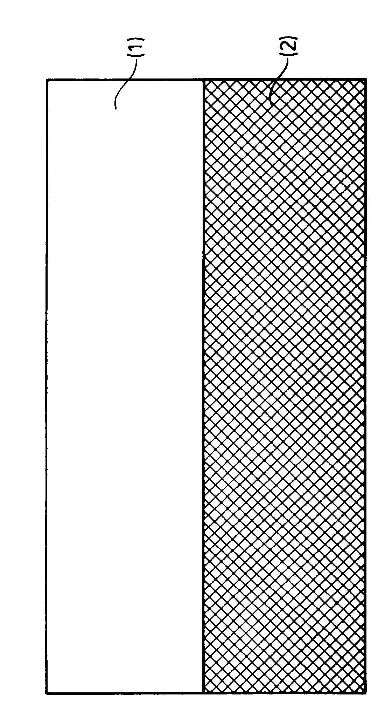

## Patentansprüche

1. Verwendung einer mindestens zweischichtigen, einseitig elektrisch leitfähigen Folie aus thermoplastischem Polyurethan (TPU) als flexible Einlage für Behälter zur Lagerung brennbarer Flüssigkeiten, die dadurch gekennzeichnet ist, daß sie aus mindestens
A) einer Schicht (1) aus leitfähig modifiziertem TPU, enthaltend
I. TPU als Basisrohstoff
II. Ruß mit einer Oberfläche nach der BET-Methode von größer oder gleich 600 m²/g und
III. gegebenenfalls die für die TPU- und Folienherstellung bekannten Zusatzstoffe
und
B) einer Schicht (2) aus TPU, die frei von den bekannten, die Leitfähigkeit erhöhenden Rußen ist, mindestens aber enthaltend:
IV. TPU als Basisrohstoff
V. die für die TPU- und Folienproduktion bekannten Zusatzstoffe
gebildet wird.

2. Verwendung einer mindestens zweischichtigen, einseitig elektrisch leitfähigen TPU-Folie nach Anspruch 1, dadurch gekennzeichnet, daß als Rohstoffbasis I und/oder IV ein Blend aus TPU eingesetzt wird.

3. Verwendung einer mindestens zweischichtigen, einseitig elektrisch leitfähigen TPU-Folie nach wenigstens einem der vorhergehenden Ansprüche, dadurch gekennzeichnet, daß wenigstens eines der eingesetzten TPU nach dem Extruderverfahren hergestellt wurde.

4. Verwendung einer mindestens zweischichtigen, einseitig elektrisch leitfähigen TPU-Folie nach wenigstens einem der vorhergehenden Ansprüche, dadurch gekennzeichnet, daß der Rußanteil II in der leitfähigen Schicht (1) 5 bis 20 Gew.-%, bezogen auf das Gesamtgewicht, beträgt.

5. Verwendung einer mindestens zweischichtigen, einseitig elektrisch leitfähigen TPU-Folie nach wenigstens einem der vorhergehenden Ansprüche, dadurch gekennzeichnet, daß die Folie einer Corona-, Fluor- oder Plasmavorbehandlung unterzogen ist.

6. Verwendung einer mindestens zweischichtigen, einseitig elektrisch leitfähigen TPU-Folie nach wenigstens einem der vorhergehenden Ansprüche, dadurch gekennzeichnet, daß die Dicke der TPU-Folie 25 µm bis 2 mm beträgt.

7. Verwendung einer Mehrschichtfolie nach wenigstens einem der vorangehenden Ansprüche als flexible Einlage für Behälter zur Lagerung brennbarer Flüssigkeiten, dadurch gekennzeichnet, daß die elektrisch leitfähige TPU-Schicht (1) sich in Kontakt mit dem zu lagernden Medium befindet.

8. Herstellung einer Folie gemäß der Ansprüche 1 bis 6, durch Coextrusion der Schichten (1) und (2).

9. Herstellung einer Folie gemäß der Ansprüche 1 bis 6, durch Verbinden von Einzelfolien A entsprechend Schicht (1) und B entsprechend Schicht (2) unter Einwirkung von Wärme und Druck.
